# EUROPEAN PATENT SPECIFICATION

(11) **EP 3 808 494 B1**
(45) Date of publication and mention of the grant of the patent: **03.12.2025**
(21) Application number: 19838561.9
(22) Date of filing: 11.07.2019
(51) Int. Cl.: B23K 26/323, B23K 26/21, B23K 26/322, C23C 24/04, B23K 26/244, B23K 103/20

(54) **METHOD FOR MANUFACTURING JOINED STRUCTURE OF DISSIMILAR MATERIALS, AND JOINED STRUCTURE OF DISSIMILAR MATERIALS**
VERFAHREN ZUR HERSTELLUNG EINER VERBUNDENEN STRUKTUR AUS UNTERSCHIEDLICHEN MATERIALIEN UND VERBUNDENE STRUKTUR AUS UNTERSCHIEDLICHEN MATERIALIEN
PROCÉDÉ DE FABRICATION DE STRUCTURE ASSEMBLÉE CONSTITUÉE DE MATÉRIAUX DISSEMBLABLES, ET STRUCTURE ASSEMBLÉE CONSTITUÉE DE MATÉRIAUX DISSEMBLABLES

(30) Priority: 19.07.2018 JP 2018136128; 20.07.2018 JP 2018136513
(43) Date of publication of application: 21.04.2021
(73) Proprietor: Kabushiki Kaisha Kobe Seiko Sho (Kobe Steel, Ltd.), Kobe-shi, Hyogo 651-8585 (JP)
(72) Inventor: MAEDA, Kyohei, Fujisawa-shi, Kanagawa 251-8551 (JP); SUZUKI, Reiichi, Fujisawa-shi, Kanagawa 251-8551 (JP)
(74) Representative: Müller-Boré & Partner Patentanwälte PartG mbB
(86) International application number: PCT/JP2019/027457
(87) International publication number: WO 2020/017420

(56) References cited:
- EP-B1- 3 068 574
- WO-A1-2016/103376
- JP-A- 2006 088 174
- JP-A- 2013 188 780
- JP-A- 2013 188 780
- JP-A- 2016 537 201
- JP-A- S58 188 585
- US-A1- 2012 074 111
- US-A1- 2017 349 221
- US-A1- 2018 036 840

## Description

### TECHNICAL FIELD

The present invention relates to a method for manufacturing a joint structure of dissimilar materials, and a joint structure of dissimilar materials (see, for example, JP 2013 188780 A, on which the preamble of the independent claims is based).

### BACKGROUND ART

In recent years, in order to reduce the weight of a vehicle body and to enhance collision safety for the purpose of reducing the amount of CO₂ emissions, a high tensile strength steel (HTSS) sheet has been applied to a body frame of an automobile or the like.

Further, for the purpose of further reducing the weight of the vehicle body, a demand for a lightweight dissimilar metal joining material obtained by joining an aluminum or aluminum alloy material and a steel material. As a method for joining dissimilar metals, there is generally a method of joining dissimilar metals with a nail, a screw, or the like. However, since the nail or the screw is relatively expensive, there is a problem in that the manufacturing cost of the joining material increases, and the resulting joining material becomes heavy by the weight of the nail or the screw.

On the other hand, when an aluminum or aluminum alloy material and a steel material are directly welded by a common method, a fragile intermetallic compound is formed at a joining interface, and a good strength cannot be obtained. Therefore, there is a demand for a welding technique by which a high strength can be obtained in the joining between an aluminum or aluminum alloy material and a steel material.

As a method for joining dissimilar metals by welding, Patent Literature 1 discloses a joining method in which an aluminum or aluminum alloy coating is formed by a cold spray method on a surface of a first base material made of steel, and the coating and a second base material made of aluminum or an aluminum alloy are welded in a manner of facing each other.

### CITATION LIST

### PATENT LITERATURE

Patent Literature 1: JP-A-2013-188780

### SUMMARY OF INVENTION

### TECHNICAL PROBLEM

When the aluminum or aluminum alloy material is an extruded material having a closed cross section, welding performed by one-sided construction from a high tensile strength steel material side is required, and the joining method described in Patent Literature 1 uses an arc welding with large heat effects, such as a tungsten inert gas (TIG) welding, a metal inert gas (MIG) welding, and a plasma welding. Therefore, in the case where a metal coating that can be welded with steel is formed on a surface of the aluminum or aluminum alloy material by cold spray, and the coating and the high tensile strength steel are welded, the aluminum or aluminum alloy material may be melted by a large amount of heat generated during the arc welding, and the joining strength may be lowered.

The present invention has been made in view of the problems described above, and an object thereof is to provide a method for manufacturing a joint structure of dissimilar materials and a joint structure of dissimilar materials, by which, in dissimilar material joining between an aluminum or aluminum alloy material and a steel material, welding performed by one-sided construction from a steel material side is enabled, and a good joint can be obtained.

### SOLUTION TO PROBLEM

A method for manufacturing a joint structure of dissimilar materials according to the present invention includes the configurations as set out in the appended claims.

A joint structure of dissimilar materials according to the present invention includes the configurations as set out in the appended claims.

### ADVANTAGEOUS EFFECTS OF INVENTION

The present invention can provide a method for manufacturing a joint structure of dissimilar materials and a joint structure of dissimilar materials, by which, in dissimilar material joining between an aluminum or aluminum alloy material and a steel material, welding performed by one-sided construction from a steel material side is enabled, and a good joint can be obtained.

### BRIEF DESCRIPTION OF DRAWINGS

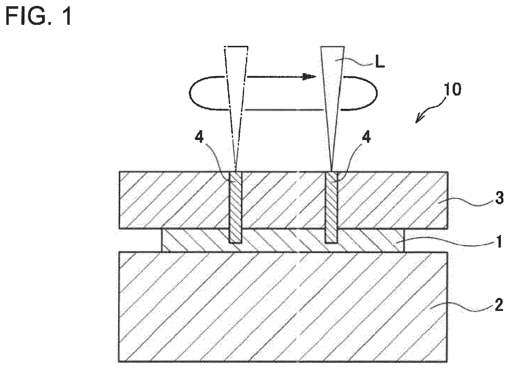

[FIG. 1] FIG. 1 is a cross-sectional view schematically showing a joint structure of dissimilar materials according to an embodiment of the present invention.

### DESCRIPTION OF EMBODIMENTS

Embodiments of the present invention are described in detail below. It should be noted that the present invention is not limited to the embodiments described below, and can be optionally changed without departing from the scope of the present invention.

The present inventors have conducted intensive studies to obtain a joining method in which a good joint can be obtained even by welding performed by one-sided construction from a steel side in dissimilar material joining between an aluminum or aluminum alloy material and a steel material. As a result, it has been found that a good joint can be obtained by forming a low-temperature thermal spray coating on at least a part of a surface of the aluminum or aluminum alloy material through low-temperature thermal spraying of metal powders that can be welded to a steel material, and joining the low-temperature thermal spray coating and the steel material by a laser welding from the steel side.

Specifically, when a metal coating (a low-temperature thermal spray coating) is formed on a surface of an aluminum or an aluminum alloy sheet by spraying a predetermined metal powder at a high speed through a low-temperature thermal spray method (a cold spray method), a high-strength mechanical bond can be obtained between the aluminum or the aluminum alloy sheet and the metal coating. Therefore, a good joint can also be obtained for a joint structure of dissimilar materials obtained by the laser welding between the aluminum or the aluminum alloy sheet and a steel material after the formation of the metal coating.

Therefore, it is considered important to appropriately select a component of the metal powder used for the low-temperature thermal spraying and the type of the steel material in order to obtain a good joint.

### [First embodiment]

First, a method for manufacturing a joint structure of dissimilar materials according to a first embodiment of the present invention and a joint structure of dissimilar materials according to a first embodiment of the present invention are described.

The method for manufacturing a joint structure of dissimilar materials according to the first embodiment of the present invention includes: a step of forming a low-temperature thermal spray coating on at least a part of a surface of an aluminum or aluminum alloy material by low-temperature thermal spraying a metal powder of at least one metal selected from ferritic stainless steel, austenitic stainless steel, and ferritic and austenitic two-phase stainless steel; a step of overlapping the aluminum or aluminum alloy material and a steel material such that the low-temperature thermal spray coating and the steel material face each other; and a step of joining the low-temperature thermal spray coating and the steel material by a laser welding from a steel material side.

FIG. 1 is a cross-sectional view schematically showing a joint structure of dissimilar materials according to the first embodiment of the present invention. As shown in FIG. 1, in a joint structure of dissimilar materials 10 according to the first embodiment, a low-temperature thermal spray coating 1 is formed on at least a part of a surface of an aluminum or aluminum alloy material 2. The aluminum or aluminum alloy material 2 and the steel material 3 are overlapped such that the low-temperature thermal spray coating 1 and the steel material 3 face each other. In addition, the low-temperature thermal spray coating 1 and the steel material 3 are laser-welded by a laser beam L radiated from the steel material 3 side, and a weld metal (a weld bead) 4 is formed by melting the low-temperature thermal spray coating 1 and the steel material 3.

The low-temperature thermal spray coating 1 includes at least one metal selected from ferritic stainless steel, austenitic stainless steel, and ferritic and austenitic two-phase stainless steel. Although not shown, fine unevenness is formed by a large amount of metal powder on the surface of the aluminum or aluminum alloy material 2 on which the metal powder is blown at a high speed by the low-temperature thermal spraying. Therefore, the low-temperature thermal spray coating 1 and the steel material 3 are mechanically firmly joined to each other by an anchor effect.

Subsequently, the method for manufacturing a joint structure of dissimilar materials according to the first embodiment is described in detail with reference to FIG. 1.

First, the low-temperature thermal spray coating 1 is formed on at least a part of the surface of the aluminum or aluminum alloy material 2 by a cold spray method. The cold spray method refers to a method for forming the low-temperature thermal spray coating 1 by blowing a gas and a metal powder to an object at a high speed equal to or higher than sound velocity. This method can be performed by appropriately selecting a type of a gas to be used, pressure, temperature, and a particle diameter of a metal powder.

As a method for forming a thermal spray coating, other thermal spray methods such as a plasma thermal spraying and an arc thermal spraying, other than the above cold spray method, are conceivable, but are not preferable because the temperature of the gas is high, and the aluminum or aluminum alloy material 2 having a relatively low melting point may be melted.

Thereafter, the steel material 3 is disposed on the obtained low-temperature thermal spray coating 1, laser welding is performed from an opposite side to a side which faces the aluminum or the aluminum alloy material 2, of the steel material 3. Thus, the low-temperature thermal spray coating 1 and the steel material 3 are melted to form the weld metal 4, thereby manufacturing the joint structure of dissimilar materials 10.

Here, the laser welding is a welding method in which heat input is low and thermal influence is small as compared with other welding methods such as an arc welding. In the case where the arc welding is used, the heat generated during welding is likely to reach the aluminum or aluminum alloy material 2. Therefore, the aluminum or aluminum alloy material 2 may also be melted and the joining strength may be lowered. However, in the case where the laser welding is used, the thermal effect on the aluminum or aluminum alloy material 2 can be inhibited to a minimum level, and melting of the aluminum or aluminum alloy material 2 can be prevented. Therefore, a decrease in joining strength can be prevented, and a good joint can be obtained.

In order to further minimize the thermal influence on the aluminum or aluminum alloy material 2, it is preferable to select an appropriate welding condition so as to melt only the low-temperature thermal spray coating 1 and the steel material 3. As conditions of the laser welding, a heat source, an output, a welding speed, a diameter of a welded portion, a gap between the low-temperature thermal spray coating 1 and the steel material 3, and the like can be appropriately selected.

Subsequently, in the manufacturing method according to the first embodiment, the low-temperature thermal spray coating 1, the metal powder used as a material thereof, the aluminum or aluminum alloy material 2, and the steel material 3 are described in detail below.

### <Metal type of metal powder: at least one selected from ferritic stainless steel, austenitic stainless steel, and ferritic and austenitic two-phase stainless steel>

In order to join the low-temperature thermal spray coating 1 and the steel material 3 by the laser welding, it is important to select a metal material, which can be welded with the steel material 3 at desired joining strength and by which properties of the weld metal 4 becomes good, as a material of the low-temperature thermal spray coating 1. In the first embodiment, stainless steel (SUS) that can easily weld a good joint between the low-temperature thermal spray coating 1 and the steel material 3 is selected.

In particular, among various types of stainless steel, ferritic stainless steel, austenitic stainless steel, and ferritic and austenitic two-phase stainless steel are more excellent in corrosion resistance than martensitic stainless steel, and thus are suitable as materials for automobiles that are exposed to a corrosive environment. Therefore, as the metal powder used for the cold spray, a powder made of at least one type of metal selected from ferritic stainless steel, austenitic stainless steel, and ferritic and austenitic two-phase stainless steel is used.

### <Particle diameter and shape of metal powder>

The particle diameter of the metal powder used as the material of the low-temperature thermal spray coating 1 is not particularly limited, and is, for example, preferably 20 µm or less, and more preferably 10 µm or less in the case where the gas pressure of the cold spray is set to a low pressure condition of 1 MPa or lower.

On the other hand, in the case where the gas pressure is set to a high pressure condition of 1 MPa to 5 MPa, the particle diameter is, for example, preferably 50 µm or less, and more preferably 30 µm or less.

The particle shape of the metal powder is not particularly limited, and is preferably spherical from the viewpoint of fluidity.

### <Type of working gas>

The gas used in the cold spray is not particularly limited, and air, a nitrogen gas, a helium gas, or a mixed gas thereof is generally used. On the other hand, when the low-temperature thermal spray coating is oxidized, the laser weldability may be adversely affected. Therefore, it is preferable to use nitrogen gas or helium gas as the gas type.

### <Temperature of working gas>

As described above, in the case where the temperature of the gas to be used in the cold spray is high, the aluminum or aluminum alloy material 2 serving as the base material of the low-temperature thermal spray coating 1 may be melted. Therefore, the temperature of the working gas is preferably lower than a melting point of the metal powder to be used for the cold spray.

### <Film thickness of low-temperature thermal spray coating>

When the film thickness of the low-temperature thermal spray coating 1 formed by cold spray is less than 0.3 mm, even if welding conditions such as melting only the low-temperature thermal spray coating 1 and the steel material 3 are appropriately selected, it may be difficult to melt only the low-temperature thermal spray coating 1 and the steel material 3 due to the variation of the laser beam L. Therefore, the robustness is low.

By setting the film thickness of the low-temperature thermal spray coating 1 to 0.3 mm or more, it is possible to flexibly deal with variations of the laser beam L, and therefore setting of strict conditions is not required. Therefore, the film thickness of the low-temperature thermal spray coating is preferably 0.3 mm or more, and more preferably 0.6 mm or more.

On the other hand, when the film thickness of the low-temperature thermal spray coating exceeds 3 mm, the depositing time may be long and the manufacturing cost may be increased. Therefore, the film thickness of the low-temperature thermal spray coating is preferably 3 mm or less, and more preferably 2 mm or less.

### <Aluminum or aluminum alloy material>

The aluminum or aluminum alloy material 2 is not particularly limited, and an aluminum alloy material such as 2000 series, 5000 series, 6000 series, and 7000 series is preferably used from the viewpoint of strength when applied to a member used for an automobile or the like. In the first embodiment, a laser welding in which welding performed by one-sided construction from the steel material 3 side is enabled is used, so that it is possible to use the aluminum or aluminum alloy material without any problem even if it is an extruded material having a closed cross section, which is widely used in the field of automobiles or the like.

### <Steel material>

The steel material 3 is not particularly limited as long as it is a member made of a metal commonly called steel. However, in recent years, a high tensile strength steel material (a high tensile material) or the like has been widely used as a steel sheet used for a body skeleton of an automobile or the like for the purpose of reducing weight of a vehicle body and enhancing the collision safety. In a mechanical joining method widely used as a steel-aluminum dissimilar material joining method, it is difficult to apply the method to a steel sheet having a tensile strength of 590 MPa or more. Therefore, the present invention is particularly effective in a high tensile strength steel sheet having a tensile strength of 590 MPa or more.

### [Second embodiment]

Next, a method for manufacturing a joint structure of dissimilar materials according to a second embodiment of the present invention and a joint structure of dissimilar materials according to the second embodiment of the present invention are described.

The method for manufacturing a joint structure of dissimilar materials according to the second embodiment of the present invention includes: a step of forming a low-temperature thermal spray coating on at least a part of a surface of an aluminum or aluminum alloy material by low-temperature thermal spraying a metal powder of at least one metal selected from pure iron, nickel, a nickel alloy, cobalt, and a cobalt alloy; a step of overlapping the aluminum or aluminum alloy material and a steel material such that the low-temperature thermal spray coating and the steel material face each other; and a step of joining the low-temperature thermal spray coating and the steel material by a laser welding from a steel material side.

The difference between the joint structure of dissimilar materials according to the second embodiment of the present invention and the joint structure of dissimilar materials according to the first embodiment lies in only materials of the low-temperature thermal spray coating. Therefore, detailed descriptions of the structure and the manufacturing method of the joint structure of dissimilar materials according to the second embodiment are omitted, and the low-temperature thermal spray coating 1 is described below with reference to FIG. 1.

The low-temperature thermal spray coating 1 of the joint structure of dissimilar materials according to the second embodiment includes at least one metal selected from pure iron, nickel, a nickel alloy, cobalt, and a cobalt alloy. Although not shown, fine unevenness is formed by a large amount of metal powder on the surface of the aluminum or aluminum alloy material 2 on which the metal powder is blown at a high speed by the low-temperature thermal spraying. Therefore, the low-temperature thermal spray coating 1 and the steel material 3 are mechanically firmly joined to each other by an anchor effect.

Subsequently, in a second embodiment of the present invention, a metal powder used as a material of the low-temperature thermal spray coating 1 is described in detail below. The particle diameter and the shape of the metal powder, the type and the temperature of the working gas, the film thickness of the low-temperature thermal spray coating, the aluminum or aluminum alloy material, and the steel material are the same as those in the first embodiment, and thus the descriptions thereof are omitted.

### <Metal type of metal powder: at least one selected from pure iron, nickel, nickel alloy, cobalt and cobalt alloy>

In order to join the low-temperature thermal spray coating 1 and the steel material 3 by the laser welding, it is important to select a metal material, which can be welded with the steel material 3 at desired joining strength and by which properties of the weld metal 4 becomes good, as a material of the low-temperature thermal spray coating 1. When stainless steel (SUS) to which a large number of quenching elements such as Cr and Ni are added is used as the metal powder, in the case where the steel material 3 is a high tensile strength steel sheet or a hot stamp material, all or a part of the weld metal 4 subjected to the base material dilution is transformed into martensite and the hardness is too high, and the joining strength (joint strength) may decrease or cracking may occur. Therefore, as the metal powder used for cold spray, a powder containing at least one metal selected from pure iron, nickel, a nickel alloy, cobalt, and a cobalt alloy is used.

In the present specification, pure iron is easily available for industrial use and represents an iron having a purity of 99.9 mass% or more. As the nickel alloy, an alloy commonly called inconel alloy, incoloy alloy, and hastelloy alloy, which mainly contains Ni and to which an appropriate amount of Mo, Fe, Co, Cr, Mn, or the like is added, can be used.

### [Example]

Hereinafter, the present invention is described in detail with reference to Examples and Comparative Examples, but the present invention is not limited thereto.

### [Example according to the first embodiment]

An example according to the first embodiment of the present invention is described below.

First, a metal coating (a low-temperature thermal spray coating) was formed on a surface of an aluminum alloy sheet having a sheet thickness of 3 mm by using cold spray.

Thereafter, a steel sheet having a sheet thickness of 1.4 mm was disposed so as to overlap with the aluminum alloy sheet via the obtained metal coating, and the metal coating and the steel sheet were laser-welded by radiating lasers from an opposite surface to a surface in contact with the metal coating, of the steel sheet, thereby manufacturing a joint structure of dissimilar materials. The laser radiation was controlled by a galvano scanner, and the metal coating and the steel sheet were welded in a circular shape as shown in FIG. 1.

The test materials, conditions of the cold spray, and conditions of welding are shown below.

### [Test material]

Aluminum alloy sheet: 7N01
Steel sheet: hot stamp material (22 MnB steel, tensile strength 1500 MPa grade)

### [Conditions of cold spray]

Gas type: Nitrogen gas
Gas pressure: 4 MPa
Gas temperature: 750 to 1100°C
Particle diameter of metal powder: 10 to 50 µm

### [Conditions of laser welding]

Heat source: Fiber laser
Output: 2.5 to 3.0 kW
Speed: 4 m/min
Beam focusing diameter: ϕ0.6 mm
Laser scanning trajectory: Circular shape
Diameter of welded portion (diameter of a circle): Aim for ϕ6 mm
Shield gas: None
Gap (sheet gap): 0 mm

### <Comparative Example>

A metal coating (a low-temperature thermal spray coating) formed using cold spray is not formed on a surface of an aluminum alloy sheet having a sheet thickness of 3 mm, and the aluminum alloy sheet and a steel sheet having a sheet thickness of 1.4 mm were overlapped. Subsequently, the aluminum alloy sheet and the steel sheet were laser-welded by radiating lasers from the surface of the steel sheet which is opposite to the surface in contact with the aluminum alloy sheet, thereby manufacturing a joint structure of dissimilar materials. In the same manner as in Examples, the laser radiation was controlled by a galvano scanner, and the aluminum alloy sheet and the steel sheet were welded in a circular shape. The conditions of laser welding were also the same as those in Examples.

Thereafter, for the obtained joint structure of dissimilar materials, a joint was subjected to cross-sectional macro observation, and the statuses of weld-penetration and welding defects were checked.

As an evaluation standard for the weld-penetration and the welding defects, a case where a weld metal was formed only between the steel material and the metal coating, and the aluminum alloy sheet was not melted was evaluated as A (evaluation: Good). In a case where a weld metal reached the aluminum alloy sheet and the aluminum alloy sheet was melted, a case where the steel material and the aluminum were joined was evaluated as B (evaluation: Pass), and a case where the steel material and the aluminum were not joined was evaluated as C (evaluation: Fail).

The following Table 1 shows a material of a metal powder used in cold spray, a film thickness of a formed metal coating, conditions of laser welding (output, gap), and evaluation results (statuses of weld-penetration and welding defects).

**Table 1**

| | Test No. | Cold spray | | Conditions of laser welding | | Evaluation results |
|---|---|---|---|---|---|---|
| | | Material of metal powder | Film thickness of metal coating (mm) | Output (kW) | Gap (mm) | Weld-penetration and welding defects |
| Examples | 1-1 | SUS 316L ⁽*⁾ | 0.4 | 2.5 | 0 | A |
| | 1-2 | SUS 316L | 0.4 | 3.0 | 0 | B |
| Comparative Example | 1-3 | - | - | 3.0 | 0 | C |

| | | | | | | |
|---|---|---|---|---|---|---|
| (*)SUS 316L is austenitic stainless steel. | | | | | | |

As shown in Table 1 above, in Test No. 1-1 and Test No. 1-2 which were Examples, the joint structure of dissimilar materials was manufactured by forming a metal coating on a surface of an aluminum or aluminum alloy sheet, and laser welding the metal coating and a steel material, and a material of a metal powder forming the metal coating is within the range of the present invention. Therefore, a good joint was obtained.

In contrast, Test No. 1-3, which was a Comparative Example, was not suitable for use because the joint between the steel material and the aluminum was not recognized.

### [Examples according to the second embodiment]

Subsequently, examples according to a second embodiment of the present invention are described.

In the examples according to the second embodiment, the manufacturing steps of a joint structure of dissimilar materials, test materials, and conditions of cold spray are the same as the examples according to the first embodiment, so that only the conditions of laser welding are shown below. Manufacturing steps of the joint structure of dissimilar materials as a Comparative Example were the same as the example according to the first embodiment, and only laser welding was performed under the following conditions.

### [Conditions of laser welding]

Heat source: Fiber laser
Output: 2.5 to 3.5 kW
Speed: 4 m/min
Beam focusing diameter: ϕ0.6 mm
Laser scanning trajectory: Circular shape
Diameter of welded portion (diameter of a circle): Aim for ϕ6 mm
Shield gas: None
Gap (sheet gap): 0 to 0.3 mm

Thereafter, for the obtained joint structure of dissimilar materials, a joint was subjected to cross-sectional macro observation, and the statuses of weld-penetration and welding defects were checked.

The evaluation criteria of the weld-penetration and the welding defects are the same as the examples according to the first embodiment.

The following Table 2 shows a material of a metal powder used in cold spray, a film thickness of a formed metal coating, conditions of laser welding (output, gap), and evaluation results (statuses of weld-penetration and welding defects).

**Table 2**

| | Test No. | Cold spray | | Conditions of laser welding | | Evaluation results |
|---|---|---|---|---|---|---|
| | | Material of metal powder | Film thickness of metal coating (mm) | Output (kW) | Gap (mm) | Weld-penetration and welding defects |
| Examples | 2-1 | Ni | 0.6 | 2.5 | 0 | A |
| | 2-2 | Ni | 1.5 | 2.5 | 0 | A |
| | 2-3 | Ni | 1.5 | 3.5 | 0 | A |
| | 2-4 | Ni | 1.5 | 2.5 | 0.3 | A |
| | 2-5 | Ni | 0.25 | 2.5 | 0 | B |
| Comparative Example | 2-6 | - | - | 3.0 | 0 | C |

As shown in Table 2 above, in Test No. 2-1 to Test No. 2-5 which were Examples, a joint structure of dissimilar materials was manufactured by forming a metal coating on a surface of an aluminum or aluminum alloy sheet, and laser welding the metal coating and a steel material, and a material of a metal powder forming the metal coating is within the range of the present invention. Therefore, a good joint was obtained.

In particular, in Test No. 2-1 to Test No. 2-4, a film thickness of the metal coating was within the preferable range of the present invention, so that only the metal coating and the steel sheet could be laser-welded without a welded part reaching the aluminum or aluminum alloy sheet, and a welded portion having better properties could be obtained.

In Test No. 2-3 in which the evaluation of the weld-penetration and the welding defects was A, it was confirmed that, as a result of the strength test, the tensile shear strength was 8.7 kN and the cross tensile strength was 5 kN, and good joint strength was obtained. In the strength test, the tensile shear strength and the cross tensile strength were measured in accordance with JIS Z3136 and JIS Z3137. The test speed of the tensile test was all set to 10 mm/min.

In contrast, Test No. 2-6, which was a Comparative Example, was not suitable for use because a joint between the steel material and the aluminum after welding was not recognized.

As described above in detail, the present invention can provide a joint structure of dissimilar materials by which welding performed by one-sided construction from a steel material side is enabled, and a good joint can be obtained.

Although the embodiments are described above with reference to the drawings, it is needless to say that the present invention is not limited to such examples. It will be apparent to those skilled in the art that various changes and modifications may be conceived within the scope of the appended claims.

### [REFERENCE SIGN LIST]

- 1: Low-temperature thermal spray coating
- 2: Aluminum or aluminum alloy material
- 3: Steel material
- 4: Weld metal (welded bead)
- 10: Joint structure of dissimilar materials
- L: Laser beam

## Claims

1. A method for manufacturing a joint structure of dissimilar materials (10) **characterized in that** it comprises:
a step of forming a low-temperature thermal spray coating (1) on at least a part of a surface of an aluminum or aluminum alloy material (2) by low-temperature thermal spraying a metal powder of at least one metal selected from the group consisting of ferritic stainless steel, austenitic stainless steel, ferritic and austenitic two-phase stainless steel, or by low-temperature thermal spraying a metal powder of at least one metal selected from the group consisting of pure iron, nickel, a nickel alloy, cobalt, and a cobalt alloy;
a step of overlapping the aluminum or aluminum alloy material (2) and a steel material (3) such that the low-temperature thermal spray coating (1) and the steel material (3) face each other; and
a step of joining the low-temperature thermal spray coating (1) and the steel material (3) by a laser welding from a steel material side.

2. The method for manufacturing a joint structure of dissimilar materials (10) according to claim 1, wherein only the low-temperature thermal spray coating (1) and the steel material (3) are melted in the laser welding.

3. The method for manufacturing a joint structure of dissimilar materials (10) according to claim 1, wherein the low-temperature thermal spray coating (1) has a film thickness of 0.3 mm or more.

4. The method for manufacturing a joint structure of dissimilar materials (10) according to claim 1, wherein the steel material (3) has a tensile strength of 590 MPa or more.

5. The method for manufacturing a joint structure of dissimilar materials (10) according to claim 1, wherein the aluminum or aluminum alloy material (2) is an extruded material having a closed cross section.

6. A joint structure of dissimilar materials (10) comprising:
an aluminum or aluminum alloy material (2);
a low-temperature thermal spray coating (1) formed on at least a part of a surface of the aluminum or aluminum alloy material (2);
a steel material (3) overlapped on the low-temperature thermal spray coating (1);
and **characterised by**:
a laser weld metal (4) formed by laser welding the low-temperature thermal spray coating (1) and the steel material (3),
wherein the low-temperature thermal spray coating (1) contains at least one metal selected from the group consisting of ferritic stainless steel, austenitic stainless steel, ferritic and austenitic two-phase stainless steel, or
wherein the low-temperature thermal spray coating (1) contains at least one metal selected from the group consisting of pure iron, nickel, a nickel alloy, cobalt, and a cobalt alloy.

7. The joint structure of dissimilar materials (10) according to claim 6, wherein the weld metal (4) is formed by melting only the low-temperature thermal spray coating (1) and the steel material (3).

8. The joint structure of dissimilar materials (10) according to claim 6, wherein the low-temperature thermal spray coating (1) has a film thickness of 0.3 mm or more.

9. The joint structure of dissimilar materials (10) according to claim 6, wherein the steel material (3) has a tensile strength of 590 MPa or more.

10. The joint structure of dissimilar materials (10) according to claim 6, wherein the aluminum or aluminum alloy material (2) is an extruded material having a closed cross section.

## Patentansprüche

1. Verfahren zur Herstellung einer Verbundstruktur aus unterschiedlichen Materialien (10),
**dadurch gekennzeichnet, dass** es umfasst:
einen Schritt des Bildens einer niedertemperatur-thermisch gespritzten Beschichtung (1) auf mindestens einem Teil einer Oberfläche eines Aluminium- oder Aluminiumlegierungsmaterials (2) durch Niedertemperatur-Thermalspritzen eines Metallpulvers aus mindestens einem Metall, ausgewählt aus der Gruppe bestehend aus ferritischem Edelstahl, austenitischem Edelstahl, ferritisch-austenitischem Zweiphasen-Edelstahl, oder durch Niedertemperatur-Thermalspritzen eines Metallpulvers aus mindestens einem Metall, ausgewählt aus der Gruppe bestehend aus Reineisen, Nickel, einer Nickellegierung, Kobalt und einer Kobaltlegierung;
einen Schritt des Überlappens des Aluminium- oder Aluminiumlegierungsmaterials (2) und eines Stahlmaterials (3) derart, dass die niedertemperatur-thermisch gespritzte Beschichtung (1) und das Stahlmaterial (3) einander gegenüberliegen; und
einen Schritt des Verbindens der niedertemperatur-thermisch gespritzten Beschichtung (1) und des Stahlmaterials (3) durch Laser-Schweißen von der Stahlmaterialseite.

2. Verfahren zur Herstellung einer Verbundstruktur aus unterschiedlichen Materialien (10) nach Anspruch 1, wobei beim Laser-Schweißen nur die niedertemperatur-thermisch gespritzte Beschichtung (1) und das Stahlmaterial (3) aufgeschmolzen werden.

3. Verfahren zur Herstellung einer Verbundstruktur aus unterschiedlichen Materialien (10) nach Anspruch 1, wobei die niedertemperatur-thermisch gespritzte Beschichtung (1) eine Schichtdicke von 0,3 mm oder mehr aufweist.

4. Verfahren zur Herstellung einer Verbundstruktur aus unterschiedlichen Materialien (10) nach Anspruch 1, wobei das Stahlmaterial (3) eine Zugfestigkeit von 590 MPa oder mehr aufweist.

5. Verfahren zur Herstellung einer Verbundstruktur aus unterschiedlichen Materialien (10) nach Anspruch 1, wobei das Aluminium- oder Aluminiumlegierungsmaterial (2) ein extrudierted Material mit geschlossenem Querschnitt ist.

6. Verbundstruktur aus unterschiedlichen Materialien (10), umfassend:
ein Aluminium- oder Aluminiumlegierungsmaterial (2);
eine niedertemperatur-thermisch gespritzte Beschichtung (1), die auf mindestens einem Teil einer Oberfläche des Aluminium- oder Aluminiumlegierungsmaterials (2) gebildet ist;
ein Stahlmaterial (3), das auf der niedertemperatur-thermisch gespritzten Beschichtung (1) überlappt ist; und **dadurch gekennzeichnet, dass**:
ein Laserschweißgut (4), das durch Laser-Schweißen der niedertemperatur-thermisch gespritzten Beschichtung (1) und des Stahlmaterials (3) gebildet ist,
wobei die niedertemperatur-thermisch gespritzte Beschichtung (1) mindestens ein Metall enthält, ausgewählt aus der Gruppe bestehend aus ferritischem Edelstahl, austenitischem Edelstahl, ferritisch-austenitischem Zweiphasen-Edelstahl, oder
wobei die niedertemperatur-thermisch gespritzte Beschichtung (1) mindestens ein Metall enthält, ausgewählt aus der Gruppe bestehend aus Reineisen, Nickel, einer Nickellegierung, Kobalt und einer Kobaltlegierung.

7. Verbundstruktur aus unterschiedlichen Materialien (10) nach Anspruch 6, wobei das Schweißgut (4) durch Aufschmelzen nur der niedertemperatur-thermisch gespritzten Beschichtung (1) und des Stahlmaterials (3) gebildet ist.

8. Verbundstruktur aus unterschiedlichen Materialien (10) nach Anspruch 6, wobei die niedertemperatur-thermisch gespritzte Beschichtung (1) eine Schichtdicke von 0,3 mm oder mehr aufweist.

9. Verbundstruktur aus unterschiedlichen Materialien (10) nach Anspruch 6, wobei das Stahlmaterial (3) eine Zugfestigkeit von 590 MPa oder mehr aufweist.

10. Verbundstruktur aus unterschiedlichen Materialien (10) nach Anspruch 6, wobei das Aluminium- oder Aluminiumlegierungsmaterial (2) ein extrudiertes Material mit geschlossenem Querschnitt ist.

## Revendications

1. Procédé de fabrication d'une structure d'assemblage de matériaux dissimilaires (10), **caractérisé en ce qu'**il comprend :
une étape consistant à former un revêtement par pulvérisation thermique basse température (1) sur au moins une partie d'une surface d'un matériau d'aluminium ou d'alliage d'aluminium (2) par pulvérisation thermique basse température d'une poudre métallique d'au moins un métal sélectionné parmi le groupe constitué d'acier inoxydable ferritique, d'acier inoxydable austénitique, d'acier inoxydable ferritique et austénitique à deux phases, ou par pulvérisation thermique basse température d'une poudre métallique d'au moins un métal sélectionné parmi le groupe constitué de fer pur, de nickel, d'un alliage de nickel, de cobalt et d'un alliage de cobalt ;
une étape consistant à faire chevaucher le matériau d'aluminium ou d'alliage d'aluminium (2) et un matériau d'acier (3) de sorte que le revêtement par pulvérisation thermique basse température et le matériau d'acier (3) se font face ; et
une étape consistant à assembler le revêtement par pulvérisation thermique basse température (1) et le matériau d'acier (3) par un soudage au laser depuis un côté du matériau d'acier.

2. Procédé de fabrication d'une structure d'assemblage de matériaux dissimilaires (10) selon la revendication 1, dans lequel seuls le revêtement par pulvérisation thermique basse température (1) et le matériau d'acier (3) sont fondus dans le soudage au laser.

3. Procédé de fabrication d'une structure d'assemblage de matériaux dissimilaires (10) selon la revendication 1, dans lequel le revêtement par pulvérisation thermique basse température (1) a une épaisseur de film de 0,3 mm ou plus.

4. Procédé de fabrication d'une structure d'assemblage de matériaux dissimilaires (10) selon la revendication 1, dans lequel le matériau d'acier (3) a une résistance à la traction de 590 MPa ou plus.

5. Procédé de fabrication d'une structure d'assemblage de matériaux dissimilaires (10) selon la revendication 1, dans lequel le matériau d'aluminium ou d'alliage d'aluminium (2) est un matériau extrudé ayant une section transversale fermée.

6. Structure d'assemblage de matériaux dissimilaires (10) comprenant :
un matériau d'aluminium ou d'alliage d'aluminium (2) ;
un revêtement par pulvérisation thermique basse température (1) formé sur au moins une partie d'une surface du matériau d'aluminium ou d'alliage d'aluminium (2) ;
un matériau d'acier (3) chevauché sur le revêtement par pulvérisation thermique basse température (1) ;
et **caractérisée par**
un métal soudé au laser (4) formé par soudage au laser du revêtement par pulvérisation thermique basse température (1) et du matériau d'acier (3),
dans lequel le revêtement par pulvérisation thermique basse température (1) contient au moins un métal sélectionné parmi le groupe constitué d'acier inoxydable ferritique, d'acier inoxydable austénitique, d'acier inoxydable ferritique et austénitique à deux phases, ou
dans lequel le revêtement par pulvérisation thermique basse température (1) contient au moins un métal sélectionné parmi le groupe constitué de fer pur, de nickel, d'un alliage de nickel, de cobalt et d'un alliage de cobalt.

7. Structure d'assemblage de matériaux dissimilaires (10) selon la revendication 6, dans laquelle le métal soudé (4) est formé en faisant fondre uniquement le revêtement par pulvérisation thermique basse température (1) et le matériau d'acier (3).

8. Structure d'assemblage de matériaux dissimilaires (10) selon la revendication 6, dans laquelle le revêtement par pulvérisation thermique basse température (1) a une épaisseur de film de 0,3 mm ou plus.

9. Structure d'assemblage de matériaux dissimilaires (10) selon la revendication 6, dans laquelle le matériau d'acier (3) a une résistance à la traction de 590 MPa ou plus.

10. Structure d'assemblage de matériaux dissimilaires (10) selon la revendication 6, dans laquelle le matériau d'aluminium ou d'alliage d'aluminium (2) est un matériau extrudé ayant une section transversale fermée.
